# EUROPEAN PATENT APPLICATION

(11) **EP 3 125 654 A1**
(43) Date of publication of application: **01.02.2017**
(21) Application number: 16180534.6
(22) Date of filing: 21.07.2016
(51) Int. Cl.: H05B 41/24, H05B 41/288, C02F 1/32, B63J 4/00

(54) **LAMP LIGHTING DEVICE**

(30) Priority: 29.07.2015 JP 2015149909
(71) Applicant: Toshiba Lighting & Technology Corporation, Yokosuka-shi Kanagawa 237-8510 (JP)
(72) Inventor: MOURI, Shinya, Yokosuka-shi, Kanagawa 237-8510 (JP)
(74) Representative: Awapatent AB

(57) **Abstract**

A lamp lighting device (6) in an embodiment includes a discharge lamp (7), a first ballast (11) including a converter (16) that converts an AC current, which is supplied from a power supply, into a DC current, a second ballast (12) including an inverter (17) that converts the DC current, which is supplied from the first ballast (11), into a high-frequency AC current, a first connection line (13) that connects the first ballast (11) and the second ballast (12) and that feeds the DC current, which is supplied from the first ballast (11), to the second ballast (2), and a second connection line (14) that connects the second ballast (12) and the discharge lamp (7) and that feeds the high-frequency AC current, which is supplied from the second ballast (12), to the discharge lamp (7).

## Description

### FIELD

Exemplary embodiments described herein relate to a lamp lighting device.

### BACKGROUND

In an ultraviolet-ray irradiating device, a discharge lamp is used in order to irradiate an ultraviolet ray on an object to be irradiated. As the ultraviolet-ray irradiating device of this type, for example, in order to perform treatment such as sterilization of ballast water taken into a ballast tank in a ship, there is an ultraviolet-ray irradiating device used to irradiate an ultraviolet ray on the ballast water serving as an object to be irradiated. In such an ultraviolet-ray irradiating device, for example, a discharge lamp is disposed in a channel through which the ballast water in the ballast tank flows. The discharge lamp is lit using a lamp lighting device.

In the lamp lighting device of the discharge lamp, there is known a technique for disposing, in a wiring route between the lamp lighting device and the discharge lamp, a starting device that reduces a pulse voltage generated by the lamp lighting device and generating a pulse voltage for starting the discharge lamp.

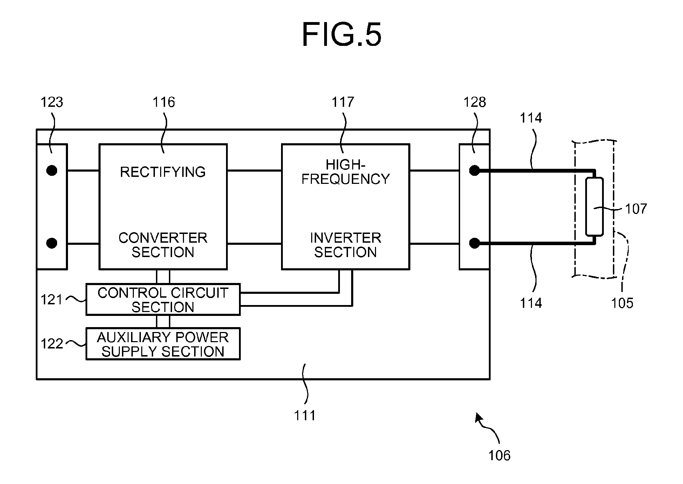

FIG. 5 is a block diagram showing the lamp lightning device included in the ultraviolet-ray irradiating device of the related art. As shown in FIG. 5, a lamp lighting device 106 in the related art includes a discharge lamp 107 disposed in a channel of an irradiation tube 105 through which ballast water flows, a ballast 111 that lights the discharge lamp 107, and a connection line 114 for feeding a high-frequency AC current from the ballast 111 to the discharge lamp 107. The ballast 111 includes a converter section 116 that rectifies an AC current supplied from a power supply and converts the AC current into a DC current and an inverter section 117 that converts the DC current into the high-frequency AC current.

The ballast 111 includes a control circuit section 121 that controls the converter section 116 and the inverter section 117 and an auxiliary power supply section 122 that supplies electric power to cause the converter section 116 and the inverter section 117 to operate. The ballast 111 includes an input terminal section 123 to which the AC current is supplied from the power supply and an output terminal section 128 that supplies the high-frequency AC current to the discharge lamp 107.

Incidentally, when the discharge lamp 107 is lit at a high frequency as explained above, in the connection line 114 for feeding the high-frequency AC current from the ballast 111 to the discharge lamp 107, a power loss occurs according to the material and the length of the connection line 114. The power loss is reduced by disposing the discharge lamp 107 and the ballast 111 close to each other and reducing the length of the connection line 114. However, there is an environment in which the ballast 111 and the power supply cannot be disposed around a position where the discharge lamp 107 is disposed.

In particular, in a ship, disposition of a control room where electronic devices such as a control device including a power board are disposed and a ballast tank in which ballast water is stored is different in each ship. The control room and the ballast tank are sometimes disposed apart from each other. When the ultraviolet-ray irradiating device is used in such a ship, the discharge lamp, which is disposed in the vicinity of the ballast tank, and the ballast, which is disposed in the control room, are disposed apart from each other. The length of the connection line is sometimes, for example, approximately 10 m to approximately 100 m. When the high-frequency AC current of approximately 3 kW flows to the connection line extended along a structure made of metal of the ship, a power loss of approximately 10% occurs in the connection line.

As measures against the power loss, it is conceivable to use a connection line for suppressing the occurrence of the power loss. In a general environment in which a type of a connection line is not limited, when the discharge lamp of the ultraviolet-ray irradiating device is lit with the high-frequency AC current, the connection line for suppressing the occurrence of the power loss is used. On the other hand, in the ship, a special connection line such as a braided cable is used. Since a type of a usable connection line is limited, when the ultraviolet-ray irradiating device is used in the ship, it is difficult to take measures using the connection line for suppressing the occurrence of the power loss.

Further, in the ship, the ship itself can be regarded as an earth. Therefore, the connection line and the earth are extremely close to each other because the connection line comes into contact with the floor surface of the like of the ship. A more power loss occurs.

Therefore, an object of the present embodiments is to provide a lamp lighting device that can suppress a power loss that occurs in a connection line for feeding a high-frequency AC current to a discharge lamp.

### BRIEF DESCRIPTION OF THE DRAWINGS

FIG. 1 is a schematic diagram showing an ultraviolet-ray irradiating device according to an embodiment;
FIG. 2 is a schematic diagram for explaining an irradiation tube and a lamp lighting device included in the ultraviolet-ray irradiating device;
FIG. 3 is a block diagram showing the lamp lighting device included in the ultraviolet-ray irradiating device;
FIG. 4 is a block diagram showing a lamp lighting device according to a modification of the embodiment; and
FIG. 5 is a block diagram showing a lamp lighting device included in an ultraviolet-ray irradiating device of the related art.

### DETAILED DESCRIPTION

A lamp lighting device 6 according to an embodiment explained below is a lamp lighting device that lights an ultraviolet lamp 7 functioning as a discharge lamp. The lamp lighting device 6 includes a first ballast 11, a second ballast 12, first connection lines 13, and second connection lines 14. The first ballast 11 includes a converter section 16 functioning as a converter that converts an AC current, which is supplied from a power supply, into a DC current. The second ballast 12 includes an inverter section 17 functioning as an inverter that converts the DC current, which is supplied from the first ballast 11, into a high-frequency AC current. The first connection lines 13 connect the first ballast 11 and the second ballast 12. The first connection lines 13 feed the DC current, which is supplied from the first ballast 11, to the second ballast 12. The second connection lines 14 connect the second ballast 12 and the ultraviolet lamp 7. The second connection lines 14 feed the high-frequency AC current, which is supplied from the second ballast 12, to the ultraviolet lamp 7.

The length of the first connection lines 13 is longer than the length of the second connection lines 14 in the lamp lighting device 6 according to the embodiment explained below.

The second ballast 12 in the lamp lighting device 6, according to the embodiment explained below, is disposed in the vicinity of an irradiation tube 5 functioning as an irradiating section that irradiates light of the ultraviolet lamp 7 functioning as the discharge lamp on an object to be irradiated.

The lamp lighting device 6, according to the embodiment explained below, further includes a plurality of discharge lamps, a plurality of second ballasts 12, and a plurality of second connection lines 14. The plurality of second ballasts 12 are connected to the first ballast 11 in parallel.

The discharge lamp in the lamp lighting device 6, according to the embodiment explained below, is the ultraviolet lamp 7 that radiates an ultraviolet ray.

The ultraviolet lamp 7 in the lamp lighting device 6, according to the embodiment explained below, is disposed in a channel 10 through which fluid on which the ultraviolet ray is irradiated flows.

The channel 10 in the lamp lighting device 6, according to the embodiment explained below, communicates with a ballast tank 4 included in a ship.

### Embodiment

An ultraviolet-ray irradiating device according to an embodiment is explained below with reference to the drawings. The ultraviolet-ray irradiating device according to this embodiment is used for irradiating an ultraviolet ray on ballast water in a ship.

### Configuration of the ultraviolet-ray irradiating device

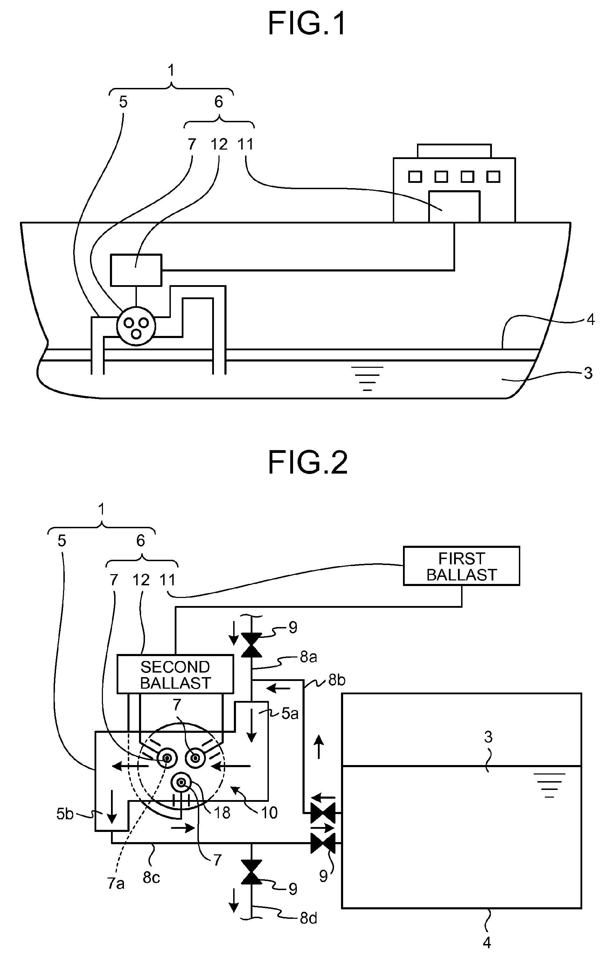

FIG. 1 is a schematic diagram showing the ultraviolet-ray irradiating device according to the embodiment. FIG. 2 is a schematic diagram for explaining an irradiation tube and a lamp lighting device included in the ultraviolet-ray irradiating device according to the embodiment. As shown in FIGS. 1 and 2, an ultraviolet-ray irradiating device 1 in the embodiment is provided on a supply route of ballast water 3 supplied from the ballast tank 4 that stores the ballast water 3 serving as an object to be irradiated. The ultraviolet-ray irradiating device 1 includes the irradiation tube 5 for irradiating an ultraviolet ray on the ballast water 3 and the lamp lighting device 6 that lights the ultraviolet lamp 7 functioning as the discharge lamp.

As shown in FIG. 2, the ultraviolet-ray irradiating device 1 includes a first pipe 8a for supplying the ballast water 3, which is supplied from the outside of the ship, to the ultraviolet-ray irradiating device 1. The ultraviolet-ray irradiating device 1 includes a second pipe 8b for supplying the ballast water 3 from the ballast tank 4 to the ultraviolet-ray irradiating device 1, a third pipe 8c for returning the ballast water 3 passed through the ultraviolet-ray irradiating device 1 to the ballast tank 4, and a fourth pipe 8d branching from the third pipe 8c to discharge the ballast water 3 from the ship to the outside. The first to fourth pipes 8a to 8d communicate with the ballast tank 4. Valves 9 that enable opening and closing of the pipes 8a to 8d are respectively provided in the first to fourth pipes 8a to 8d.

The irradiation tube 5 of the ultraviolet-ray irradiating device 1 is disposed between the second pipe 8b and the third pipe 8c of the ballast tank 4. The irradiation tube 5 includes the channel 10 through which the ballast water 3 supplied from the ballast tank 4 flows. A supply port 5a coupled to the second pipe 8b is provided at one end of the irradiation tube 5. A discharge port 5b coupled to the third pipe 8c is provided at the other end of the irradiation tube 5.

### Configuration of the lamp lighting device

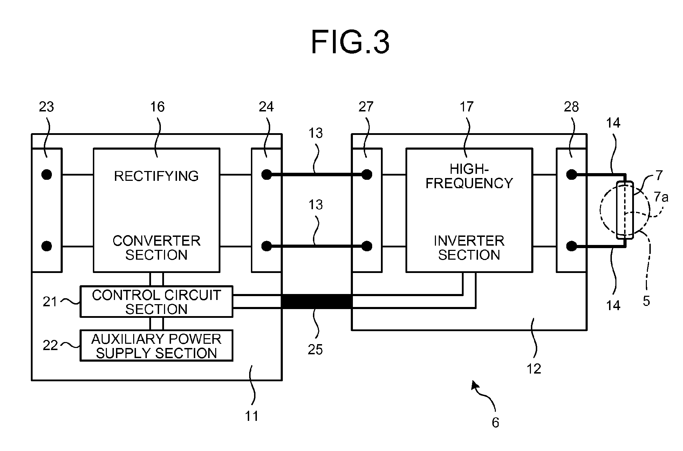

FIG. 3 is a block diagram showing the lamp lighting device 6 included in the ultraviolet-ray irradiating device 1 according to the embodiment. As shown in FIG. 3, the lamp lighting device 6 includes the ultraviolet lamp 7, the first ballast 11, the second ballast 12, the first connection lines 13, and the second connection lines 14. Note that, as shown in FIG. 3, the lamp lighting device 6 may include a control circuit section 21 and an auxiliary power supply section 22 on the inside of the first ballast 11. As shown in FIG. 3, the lamp lighting device 6 may include a signal line 25.

As shown in FIG. 2, pluralities of ultraviolet lamps 7 are disposed in the channel 10 of the irradiation tube 5 at a predetermined interval. The ultraviolet lamps 7 are disposed such that center axes 7a of the ultraviolet lamps 7 are orthogonal to a direction in which the ballast water 3 in the channel 10 flows. The ultraviolet lamp 7 is a so-called HID (High Intensity Discharge) lamp. For example, a mercury lamp is used as the ultraviolet lamp 7. Although not shown in the figure, the ultraviolet lamp 7 includes an arc tube and a pair of electrodes disposed at both ends of the arc tube. Rare gas and mercury are encapsulated in the arc tube.

Note that, in the ultraviolet lamp 7, metal halide such as iron iodide may be further encapsulated in the arc tube in addition to the rare gas and the mercury. The "ultraviolet ray" is light having a wavelength of 400 nm or less and is, specifically, light having a wavelength of 254 nm or 365 nm that is a bright line of the mercury encapsulated in the arc tube. However, lights having other wavelengths may be the ultraviolet ray. The ultraviolet lamp 7 is not limited to an ultraviolet lamp that radiates light having a wavelength of 400 nm or less. The ultraviolet lamp 7 may be, for example, an ultraviolet lamp that not only radiates the light having a wavelength of 400 nm or less but also radiates light further on a long wavelength side than 400 nm. In short, a light emission form of the ultraviolet lamp 7 is not limited as long as the ultraviolet lamp 7 is an ultraviolet lamp that radiates light having a wavelength of 400 nm or less. The disposition of the ultraviolet lamp 7 is not limited to the disposition explained above. For example, the tube axis of the ultraviolet lamp 7 may be disposed substantially parallel along the direction in which the ballast water 3 in the channel 10 flows.

The plurality of ultraviolet lamps 7 disposed in the channel 10 of the irradiation tube 5 are respectively covered by protection tubes 18 having transmittance of an ultraviolet ray. The protection tubes 18 are fixed to the inside of the irradiation tube 5. Consequently, the ultraviolet lamps 7 are protected from the ballast water 3 flowing in the irradiation tube 5.

The first ballast 11 includes the converter section 16 functioning as a converter (an AC/DC converter) that rectifies an AC current supplied from a not-shown power supply and converts the AC current into a DC current. The first ballast 11 includes an input terminal section 23 to which the AC current is supplied from the power supply and an output terminal section 24 that supplies the DC current converted by the converter section 16 to the second ballast 12. The first ballast 11 includes the control circuit section 21 that controls the converter section 16 and the inverter section 17 explained below and the auxiliary power supply section 22 that supplies an auxiliary AC current to the control circuit section 21 when the supply of the AC current from the power supply stops.

The second ballast 12 includes the inverter section 17 functioning as an inverter (a DC/AC inverter) that converts the DC current, which is supplied from the first ballast 11, into a high-frequency AC current. The second ballast 12 includes an input terminal section 27 to which the DC current is supplied from the first ballast 11 and an output terminal section 28 that supplies the high-frequency AC current converted by the inverter section 17 to the ultraviolet lamp 7.

The control circuit section 21 is connected to the converter section 16 and the inverter section 17. The control circuit section 21 transmits control signals for controlling the converter section 16 and the inverter section 17 to the converter section 16 and the inverter section 17. The control circuit section 21 is driven at, for example, DC 24V or DC 5V. The auxiliary power supply section 22 is connected to the control circuit section 21 and supplies electric power to the control circuit section 21. The auxiliary power supply section 22 supplies a DC current of, for example, DC 24V or DC 5V to the control circuit section 21.

The first connection lines 13 connect the first ballast 11 and the second ballast 12 and feed the DC current, which is supplied from the first ballast 11, to the second ballast 12. The second connection lines 14 connect the second ballast 12 and the ultraviolet lamp 7 and feed the high-frequency AC current, which is supplied from the second ballast 12, to the ultraviolet lamp 7. The control circuit section 21 of the first ballast 11 and the inverter section 17 of the second ballast 12 are connected via the signal line 25 for sending a control signal. As the first and second connection lines 13 and 14 and the signal line 25, a braided cable obtained by further covering, with a coating material made of metal, a plurality of electric wires obtained by covering conductors with an insulation material is used. However, a form of a cable is not limited.

In the lamp lighting device 6 in the embodiment, the first ballast 11 is set in a control room of the ship. The second ballast 12 is disposed in the vicinity of the ballast tank 4 away from the control room. In other words, the second ballast 12 is disposed in the vicinity of the irradiation tube 5 functioning as an irradiating section disposed in the vicinity of the ballast tank 4. The vicinity indicates a range of approximately 1 m to 2 m from the irradiation tube 5.

The first ballast 11 and the second ballast 12 are disposed apart from each other in this way. Therefore, the first connection lines 13 are set relatively long and the second connection lines 14 are set relatively short. The length of the first connection lines 13 is set to, for example, approximately 10 m to 100 m. The length of the second connection lines 14 is set to, for example, approximately 1 m to 2 m. Therefore, the length of the first connection lines 13 is set longer than the length of the second connection lines 14.

In the lamp lighting device 6, even when the length of the first connection lines 13 for feeding the DC current from the first ballast 11 to the second ballast 12 is set long compared with the length of the second connection lines 14, a power loss hardly occurs. On the other hand, in the second connection lines 14 for feeding the high-frequency AC current from the second ballast 12 to the ultraviolet lamp 7, a power loss easily occurs compared with the first connection lines 13. However, the second connection lines 14 are set relatively short by setting the first connection lines 13 long. A power loss is suppressed from occurring.

Note that the high-frequency AC current in this embodiment indicates, for example, an AC current having a frequency of approximately several kilohertz to approximately several ten megahertz. However, the frequency is not particularly limited.

### Routes of the DC current and the high-frequency AC current in the lamp lighting device

First, in the lamp lighting device 6 in the embodiment, as explained above, the first ballast 11 is disposed in the control room and the second ballast 12 is disposed in the vicinity of the ballast tank 4 apart from the control room. In the lamp lighting device 6, an AC current of, for example, approximately 400 V is supplied from the power supply to the input terminal section 23 of the first ballast 11. The first ballast 11 converts, with the converter section 16, the AC current into a DC current of, for example, approximately 400 V or approximately 700 V. The DC current converted by the converter section 16 is output from the output terminal section 24 of the first ballast 11 to the first connection lines 13 and fed by the first connection lines 13. The DC current fed by the first connection lines 13 drawn around in the ship is supplied to the input terminal section 27 of the second ballast 12.

The second ballast 12 converts the DC current supplied to the input terminal section 27 into a high-frequency AC current with the inverter section 17. The high-frequency AC current converted by the inverter section 17 is output from the output terminal section 28 of the second ballast 12 to the second connection lines 14 and fed by the second connection lines 14. The high-frequency AC current fed by the second connection lines 14 is supplied to the ultraviolet lamp 7 in the irradiation tube 5. The ultraviolet lamp 7 is lit.

Even when the ultraviolet-ray irradiating device 1 is set under an environment in which the control room and the ballast tank 4 are separated in the ship, by setting the second ballast 12 in the vicinity of the ballast tank 4 and extending the first connection lines 13, the length of the second connection lines 14 is minimized. Consequently, it is possible to reduce the length of the second connection lines 14 for feeding the high-frequency AC current. A power loss that occurs when the ultraviolet lamp 7 is lit using the high-frequency AC current is suppressed.

Note that, as the distance between the second ballast 12 and the ultraviolet lamp 7 increases, the length of the second connection lines 14, which connect the second ballast 12 and the ultraviolet lamp 7, increases. Therefore, a power loss, that occurs when the high-frequency AC current is fed, increases. However, an effect is sufficiently obtained compared with the lamp lighting device of the related art.

In the lamp lighting device of the related art, a power loss of approximately 10% occurs when the high-frequency AC current is fed by the connection line having the length of approximately 10 m to 20 m from the ballast disposed in the control room to the ultraviolet lamp in the irradiation tube disposed in the vicinity of the ballast tank.

When the lamp lighting device of the related art is used in a ship, the ship itself can be regarded as an earth. Therefore, when the connection line comes into contact with the floor surface or the like of the ship, the connection line and the earth are extremely close to each other. A more power loss occurs.

In contrast, in the lamp lighting device 6 in the embodiment, a power loss was able to be suppressed to approximately 0.1% when the high-frequency AC current was fed by the second connection lines 14 having the length of approximately 1 m to 2 m from the second ballast 12 disposed in the vicinity of the ballast tank 4 to the ultraviolet lamp 7 in the irradiation tube 5 disposed in the vicinity of the ballast tank 4. Therefore, according to the embodiment, it is possible to reduce the power loss that occurs when the discharge lamp is lit using the high-frequency AC current to approximately 1/100.

Further, when the lamp lighting device 6 in the embodiment is used in a ship, regarding the ship itself as an earth, even when the connection line comes into contact with the floor surface or the like of the ship and the connection line and the earth are extremely close to each other, it is possible to suppress a power loss.

The lamp lighting device 6 in the embodiment includes the first ballast 11, the second ballast 12, the first connection lines 13 for feeding the DC current from the first ballast 11 to the second ballast 12, and the second connection lines 14 for feeding the high-frequency AC current from the second ballast 12 to the ultraviolet lamp 7. Consequently, by disposing the second ballast 12 in the vicinity of the ultraviolet lamp 7, it is possible to reduce the length of the second connection lines 14. It is possible to suppress a power loss that occurs in the second connection lines 14 for feeding the high-frequency AC current to the ultraviolet lamp 7.

According to the embodiment, only the second ballast 12 has to be disposed in the vicinity of the ballast tank 4. Therefore, the lamp lighting device 6 is suitably used, in particular, as in a small ship, under an environment in which it is difficult to secure a space for setting the entire lamp lighting device 6 in the vicinity of the ballast tank 4.

According to the embodiment, the first ballast 11 and the second ballast 12 can be separated. Therefore, the lamp lighting device 6 is suitably used, in particular, as in a small ship, under an environment in which it is difficult to secure a space for setting the lamp lighting device 6 in a power board of the small ship.

According to the embodiment, the length of the first connection lines 13 is longer than the length of the second connection lines 14. Consequently, it is possible to suppress a power loss when electric power is supplied from the second ballast 12 to the ultraviolet lamp 7 via the second connection lines 14.

According to the embodiment, the second ballast 12 is disposed in the vicinity of the irradiating section 5 that irradiates the light of the ultraviolet lamp 7 on the object to be irradiated. Consequently, it is possible to reduce a power loss that occurs when the ultraviolet lamp 7 is lit using the high-frequency AC current to approximately 1/100.

According to the embodiment, the lamp lighting device 6 includes the ultraviolet lamp 7 that radiates an ultraviolet ray. Consequently, it is possible to irradiate the ultraviolet ray on the object to be irradiated and perform treatment such as sterilization of the ballast water 3.

According to the embodiment, the ultraviolet-ray irradiating device 1 includes the lamp lighting device 6. The ultraviolet lamp 7 irradiates light on the object to be irradiated. Consequently, in particular, in a small ship or the like, it is possible to set the ultraviolet-ray irradiating device 1.

A lamp lighting device in a modification according to the embodiment is explained below with reference to the drawings. Note that, in the modification, components same as the components in the embodiment are denoted by reference numerals and signs same as the reference numerals and signs in the embodiment. Explanation of the components is omitted.

### Modification

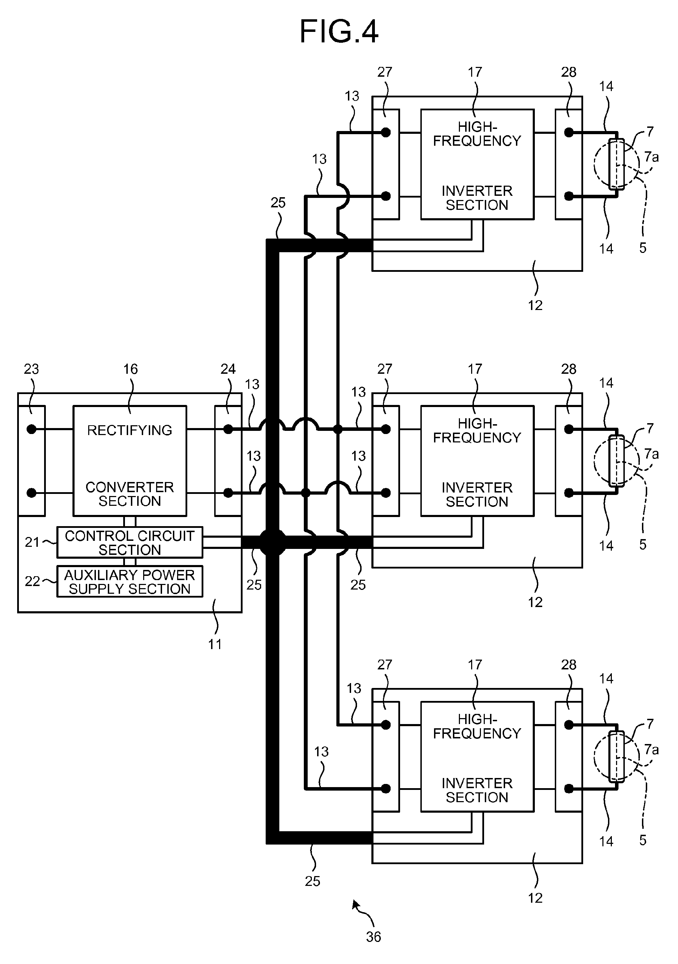

FIG. 4 is a block diagram showing a lamp lighting device in a modification. The modification is different from the embodiment in that a lamp lighting device 36 includes a plurality of ultraviolet lamps 7 respectively lit by a plurality of second ballasts 12.

As shown in FIG. 4, the lamp lighting device 36 in the modification includes the plurality of ultraviolet lamps 7 and the first ballast 11 that converts an AC current supplied from a power supply into a DC current. The lamp lighting device 36 includes the plurality of second ballasts 12 that convert the DC current supplied from the first ballast 11 into a high-frequency AC current and respectively light the plurality of ultraviolet lamps 7. The plurality of second ballasts 12 are connected to the first ballast 11 in parallel via the first connection lines 13.

The plurality of ultraviolet lamps 7 are respectively disposed in, for example, different positions of irradiation tubes 5. The first connection lines 13 connected to the output terminal section 24 of the first ballast 11 are respectively connected to input terminal sections 27 of the plurality of second ballasts 12. Similarly, signal lines 25 connected to the control circuit section 21 of the first ballast 11 are respectively connected to inverter sections 17 of the plurality of second ballasts 12. The plurality of second ballasts 12 are respectively disposed in the irradiation tubes 5 set in different positions.

Note that, in FIG. 4, for convenience of illustration, the first connection lines 13 and the signal lines 25 are divided and shown. However, the first ballast 11 and the plurality of second ballasts 12 are individually connected using a plurality of first connection lines 13 and a plurality of signal lines 25.

In the modification, as in the embodiment, it is possible to suppress a power loss that occurs in the second connection lines 14 for feeding the high-frequency AC current to the ultraviolet lamps 7. According to the modification, it is possible to use the power supply in common in the plurality of ultraviolet lamps 7 disposed in the different positions of the irradiation tubes 5.

The first ballast 11 and the plurality of second ballasts 12 are respectively connected via the plurality of first connection lines 13. Therefore, even when the pluralities of second ballasts 12 are set in different positions, it is possible to equalize the lengths of the second connection lines 14 for feeding the high-frequency AC current to the ultraviolet lamps 7. Therefore, it is possible to equalize and stabilize the lighting quality of the plurality of ultraviolet lamps 7.

Note that this embodiment is applied to the ship. However, this does not limit the ultraviolet-ray irradiating device to the use in the ship. For example, it is desirable that the ultraviolet-ray irradiating device is used, for example, when a control room and a treatment room are separated in a contaminated water treatment facility or the like.

The ultraviolet-ray irradiating device in the embodiment may be applied to, for example, irradiate an ultraviolet ray to soot and smoke. It is desirable that the ultraviolet-ray irradiating device is used when it is difficult to secure a space for disposing the entire lamp lighting device around an irradiation tube as in an exhaust duct to which soot and smoke flows.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A lamp lighting device that lights a discharge lamp, the lamp lighting device comprising:
a first ballast including a converter that converts an AC current, which is supplied from a power supply, into a DC current;
a second ballast including an inverter that converts the DC current, which is supplied from the first ballast, into a high-frequency AC current;
a first connection line that connects the first ballast and the second ballast and that feeds the DC current, which is supplied from the first ballast, to the second ballast; and
a second connection line that connects the second ballast and the discharge lamp and that feeds the high-frequency AC current, which is supplied from the second ballast, to the discharge lamp.

2. The lamp lighting device according to claim 1, wherein length of the first connection line is longer than length of the second connection line.

3. The lamp lighting device according to claim 1 or 2, wherein the second ballast is disposed in a vicinity of an irradiating section that irradiates light of the discharge lamp on an object to be irradiated.

4. The lamp lighting device according to any one of claims 1 to 3, further comprising:
a plurality of the discharge lamps;
a plurality of the second ballasts; and
a plurality of the second connection lines, wherein
the plurality of second ballasts are connected to the first ballast in parallel.

5. The lamp lighting device according to any one of claims 1 to 4, wherein the discharge lamp is an ultraviolet lamp that radiates an ultraviolet ray.

6. The lamp lighting device according to claim 5, wherein the discharge lamp is disposed in a channel through which fluid, on which an ultraviolet ray is irradiated, flows.

7. The lamp lighting device according to claim 6, wherein the channel communicates with a ballast tank included in a ship.
